# EUROPEAN PATENT APPLICATION

(11) **EP 1 209 595 A2**
(43) Date of publication of application: **29.05.2002**
(21) Application number: 01126410.8
(22) Date of filing: 07.11.2001
(51) Int. Cl.: G06F 17/60

(54) **Group work control system, group work control method and group work control program**

(30) Priority: 07.11.2000 JP 2000339414
(71) Applicant: Kabushiki Kaisha Toshiba, Tokyo 105-8001 (JP)
(72) Inventor: Wada, Shinobu, Intellectual Property Division, Minato-ku, Tokyo (JP); Kawate, Keiichi, Intellectual Property Division, Minato-ku, Tokyo (JP)
(74) Representative: HOFFMANN - EITLE

(57) **Abstract**

A group work control system 10 is implemented with a network including respective terminals 1a to 1c connected to each other by a communication line 4 and serves to control development work and the like having a plurality of work steps through the network. The group work control system 10 comprises a server 2 serving to provide a schedule file in which is written the schedule of the work steps and a group work cooperation program running on the terminal 1a to 1c for displaying the work items to be conducted in the respective work steps.

By this configuration, it is possible to let the respective engineers know necessary information relating to the development without delay and share the information about the application software required for each step of development and information about the progress of the schedule, in the case of the development conducted by a plurality of engineers in a plurality of development steps.

## Description

### CROSS REFERENCE TO RELATED APPLICATIONS

This application is based upon and claims the benefit of priority from prior Japanese Patent Application P2000-339414 filed on November 7, 2000; the entire contents of which are incorporated by reference herein.

### BACKGROUN OF THE INVENTION

### 1. Field of the invention

The present invention relates to a group work control system, group work control method and a group work control program for controlling work items through a network.

### 2. Description of the Related Art

In the past, the development of semiconductor devices, elementary techniques and so forth has been conducted as a number of development steps separately by engineers of the respective departments in charge using a variety of application softwares (tools) on the computer terminals they use.

Such application softwares includes following examples as
(1) calculation tools for use in technical calculations,
(2) information providing tools required for determining the technical judgments,
(3) text file preparation tools for preparing text files such as several reports and necessary requests about development to customers and/or related departments,
(4) communication tools (and/or predetermined formats) with which data items are handled, e.g., tools for treating e-mails for communication with customers and/or related departments,
(5) database tools for accessing specific purpose databases in order to extract and/or store necessary data,
(6) schedules management tools (and/or simply files) for managing development schedules.
(7) man power management tools (and/or simply files) for managing engineers in charge of development and so forth, and
(8) inventory control tools (and/or simply files) for managing the stock of necessary parts and so forth.

However, in accordance with a conventional technique of controlling development as described above, the respective engineers make use of a plurality of application softwares for the respective development steps and therefore have to learn how to execute and use these application softwares and so forth. Particularly, in the case of application softwares which are not always but only sometimes used, there are disadvantages of a time-consuming job of reading manuals thereof, troubles originating from wrong usages and so forth.

Particularly, it is sometimes the case that inexperienced engineers hardly comprehend for a while the application software itself required for each step of development so that they can not readily start actual works. Also, it is sometimes inevitable to search a database for necessary data required in development. It is sometimes the case that, because of a disparity in the ability of searching databases due to differential experiences, the use of a database takes a substantial amount of time when inexperienced engineers search for necessary data while a certain skill is required to effectively use a database.

Furthermore, the application softwares, the text files and the software development data are often updated without previous notice and therefore it is sometimes the case that some individual engineer is continuing to make use of programs, text files and so forth of old versions with his personal computer. There may be some engineers who are unaware of an updated version with which usability has been improved and some bugs have been fixed. Also, some engineers may be unaware of effective application softwares if any. Also, some engineers may make use of an old version which is problematic in the reliability.

Furthermore, since each engineer maintains by himself the text files, the progress of the works and the schedule relating to his work, it is difficult to share them with other engineers in charge of the same project and therefore it is likely that efforts of these engineers overlap with each other to deteriorate the efficiency of collaboration. Still Further, since information is not shared and exchanged, it is difficult to control the order of works as conducted in the consecutive development steps. Accordingly, there is a problem that latest information is hardly transferred to all the engineers at the same time in regard to the alteration of the schedule of proceeding the project.

### BRIEF SUMMARY OF THE INVENTION

An aspect of the present invention provides a group work control system for controlling a work having a plurality of work steps through a network of terminals connected to each other by a communication line, said group work control system comprising:
a file generator which is connected to said network and configured to generate a schedule file in which the schedule of said work steps is written;
a database which is configured to store said schedule file in order that said schedule file is accessible through said network; and
an output device which is configured to provide work items to be conducted in the respective work steps on the basis of said schedule file as obtained.

Another aspect of the present invention provides a group work control method for controlling a work having a plurality of work steps through a network of terminals connected to each other by a communication line, said group work control method comprising:
generating a schedule file in which a schedule of said work steps is written;
storing said schedule file in a database accessible through said network; and
displaying work items to be conducted in the respective work steps on the basis of said schedule file.

A further aspect of the present invention provides a work control program product comprising a computer readable medium having computer program logic stored therein for controlling a work having a plurality of work steps through a network of terminals connected to each other by a communication line by the use of a template file in which is written a standard work time, wherein said computer program logic comprises:
a step of amending a template file by registering the start-up date of said work steps in a calendar file;
a step of generating a schedule file containing a day's program of said work steps on the basis of the template file as amended; and
a step of storing said schedule file in a database accessible through said network.

A still further aspect of the present invention provides a work control program product comprising a computer readable medium having computer program logic stored therein for controlling a work having a plurality of work steps through a network of terminals connected to each other by a communication line, wherein said computer program logic comprises:
a stop of obtaining a development project as registered in said network;
a step of determining whether or not a schedule file as prepared corresponding to said development project is updated;
a step of obtaining the latest schedule file as updated when said schedule file is updated; and
a stop of displaying the latest schedule file as obtained in the form of a flowchart.

### BRIEF DESCRIPTION OF THE SEVERAL VIEWS OF THE DRAWINGS

Fig.1 is a schematic diagram showing the overall configuration of the group work control system in accordance with an embodiment of the inventors of the present invention.

Fig.2 is a flowchart showing the operation of the group work control system in accordance with the embodiment of the present embodiment.

Fig.3 is a flowchart showing the operation of the group work control system in accordance with the embodiment of the present embodiment.

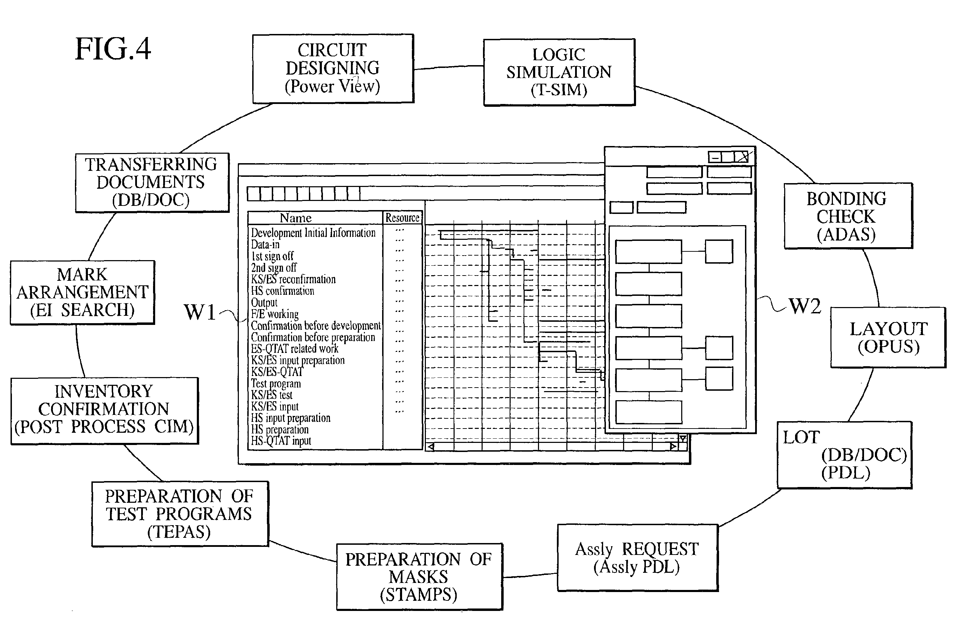

Fig.4 is a view for explaining the functions of the group work cooperation program in accordance with the embodiment of the present embodiment.

Fig.5 is an explanatory view for showing the operational steps of the group work cooperation program in accordance with the embodiment of the present embodiment.

Fig.6 is a schematic representation for showing the relationship between the group work cooperation program and the schedule and work flow files in accordance with the embodiment of the present embodiment.

Fig.7 is a flowchart showing the operation of the group work control system in accordance with the embodiment of the present embodiment.

### DETAILED DESCRIPTION OF THE INVENTION

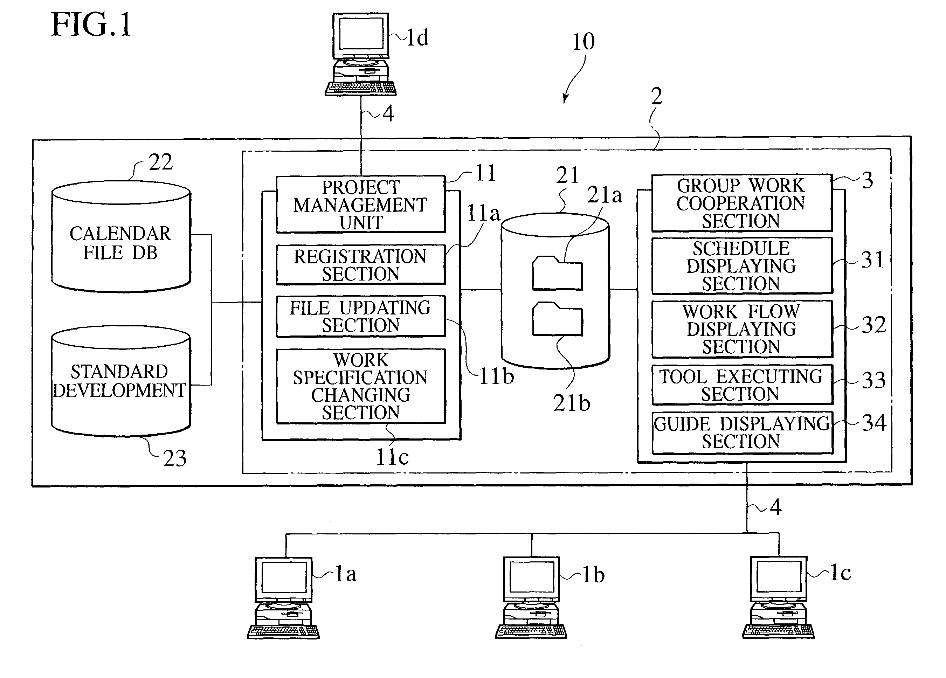

In the following description, the group work control system in accordance with an embodiment of the present invention will be explained. Fig.1 is a schematic diagram showing the overall configuration of the group work control system 10 in accordance with the present embodiment.

As illustrated in the same figure, the group work control system 10 is implemented with a network including the terminals 1a to 1d used by the respective engineers of the group and a server 2 functioning as a center server of the network. The terminals 1a to 1d and the center server 2 are connected to each other by communication lines 4 such as the Internet, LAN and so forth.

Each of the terminals 1a to 1d can be implemented with a general purpose computer such as a personal computer in which is installed necessary softwares for implementing several functions as explained later. Meanwhile, in the case of the present embodiment, the terminals 1a to 1c are used by general engineers in charge of the respective work of the cooperation while the terminal 1d is used by an administrator in charge of controlling the group work.

The server 2 in accordance with the present embodiment serves to control and inanage the overall schedule and the respective development steps of the project on the basis of a calendar file and a standard development time file. The server 2 is connected to the network and provided with a project management unit 11 (a file generator) for generating a schedule file in which is written the schedule of the work specifications, a group work cooperation section 3 (an output device) for obtaining the schedule file from a product database 21 and outputting the work items of the respective work steps on the basis of the schedule file. Meanwhile, in the case of the present embodiment, the project management unit 11 and the group work cooperation section 3 are implemented by running a project management program and a group work cooperation program in the server 2.

Namely, the project management unit 11 is implemented with the project management program running on the server 2 which is in turn implemented with logic operation devices such as a CPU and so forth and controlled by the terminal 1d of the administrator. The project management unit 11 is provided with a registration section 11a for registering anew a working project, a file updating section 11b for generating and rewriting the respective files and a work specification changing section 11c for updating the respective files when the work specifications are changed. In this case, the respective files includes the schedule file and the work flow file of a product which will be explained in the following description.

The group work cooperation section 3 is implemented with a program which is installed in the terminals 1a to 1c and executable while reading the respective shared files as stored in the product directories 21a and 21b. The group work cooperation section 3 is provided with a schedule displaying section 31 for displaying a schedule in each of the terminals 1a to 1c of the respective engineers, a work flow displaying section 32 for displaying a work flow, a tool executing section 33 for executing working tools and a guide displaying section 34 for displaying a guide to the respective works and application programs.

Also, the server 2 is provided with a product database 21 for storing the schedule file and the work flow files of each product, a calendar file database 22 for storing a calendar file and a standard development time database 23 for storing a standard development time file.

The product database 21 is provided to maintain the product directories 21a and 21b for storing necessary files related to each product. Namely, the schedule file and work flow files are maintained for each product therein. When the schedule or the flow of the respective working steps is changed, the server 2 serves to output the latest schedule file and the latest work flow file as updated to the product database 21 and stored in the product directories 21a and 21b.

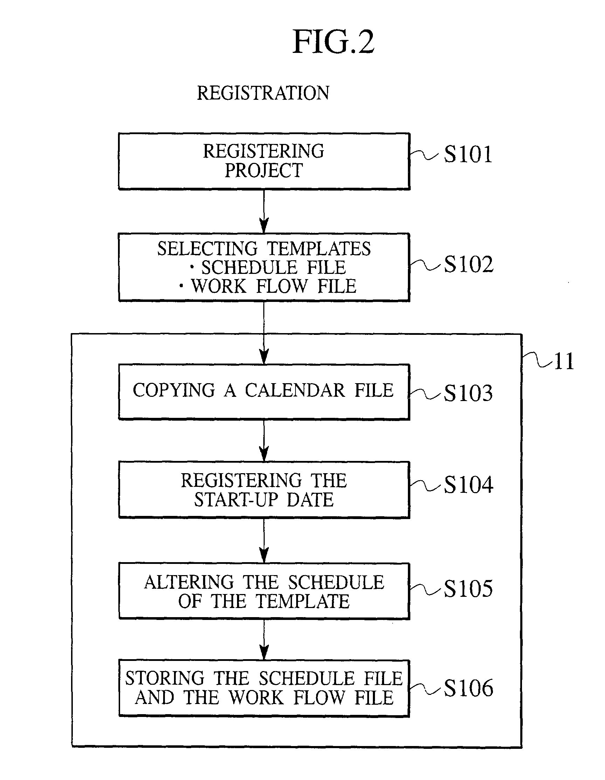

Accordingly, the group work control method in accordance with the group work control system 10 comprises the following steps. Fig.2 is a flowchart showing the procedure for registering the work schedule and the work flow in accordance with the group work control method of the present embodiment.

As illustrated in Fig.2, first, the project (development plan) is registered by the registration section 11a of the server 2 in the step S101. Next, on the basis of the work schedule and the work flow, templates thereof are selected for registeration thereof in the step S102.

Then, a schedule file is generated by the file updating section 11b. More specifically speaking, the schedule file is generated by obtaining (copying) a calendar file in the step S103, registering the start-up date in the step S104 and rewriting the schedule of the template in the step S105, followed by storing the schedule file and the work flow file as generated in the product directories 21a and 21b of the product database 21 in the step S106.

Meanwhile, these processes can be implemented with appropriate softwares. For example, in the case of the present embodiment, a project management program is used for this purpose.

The administrator manipulates the terminal 1d to use the project management program in order to determine the standard development time and make necessary amendment on the overall schedule on the basis of the calendar file and the standard development time file. More specifically speaking, the project management program serves to read the calendar file and the standard development time file, generate a schedule file in which are written the development steps of the respective product in accordance with a macro process and store the schedule file in the product directories 21a and 21b corresponding to the respective product.

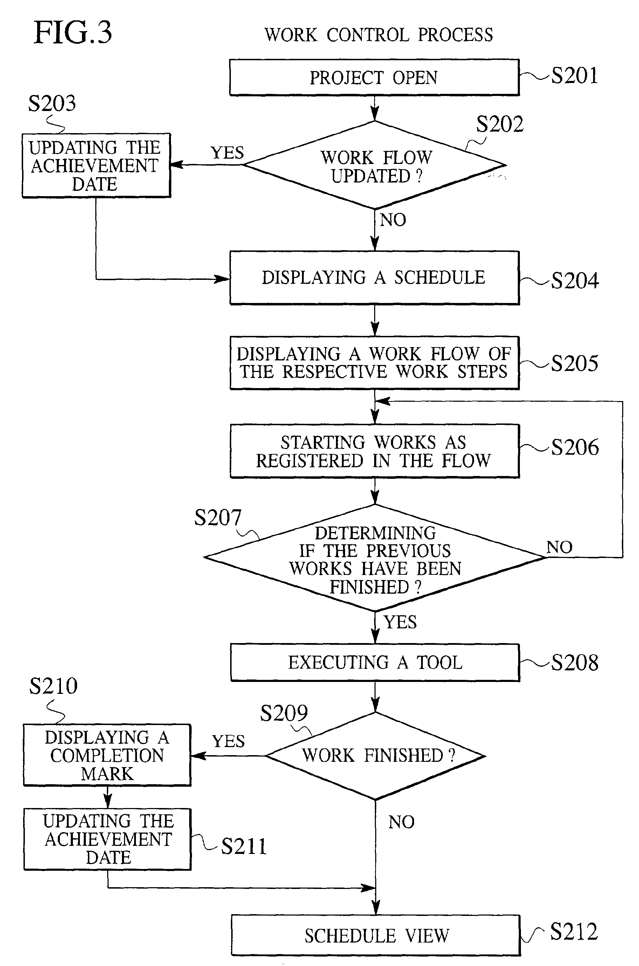

Next, Fig.3 is a flowchart showing the respective steps conducted by the group work cooperation section 3 for supporting the respective engineers who make use of the group work control system in accordance with the present embodiment.

After registering the project as described above, the respective works are initiated at the respective terminals 1a to 1c. In proceeding with the respective works, at first, the schedule displaying section 31 serves to open the project in the step S201, obtain the schedule file from the product directories 21a and 21b, and visually provide the current schedule by means of the schedule displaying section 31 in the step S204. At this time, it is judged whether or not the work flow file is updated in the step S202 by analyzing the schedule file as obtained. If the work flow file is updated, the latest work flow file is obtained in the step S203.

Meanwhile, the server 2 is monitoring any access to the product directories 21a and 21b by the respective engineers. When an engineer accesses to some file stored in the product directories 21a and 21b, the server 2 records the object as accessed, the time of the access and the user name having accessed in an access log file.

Next, the work flow displaying section 32 serves to display a work flow of the respective process (the work steps) in the step S205.

Then, as illustrated in Fig.3, preparation is made for starting the works as registered in the flow as displayed in the step S206. In this case, it is required to determine if the confirmation should be made of whether or not the previous works have been finished in the step S207. If the previous works have not yet been finished, an alternative work flow is presented. If the previous works have been finished, the tool required for the next work as described above is executed in the step S208.

Thereafter, it is judged whether or not the work is finished in the step S209 followed by displaying the schedule view in the step S212. If the work is finished in this case, a completion mark is displayed in the step S210 followed by updating the product database with respect to the achievement date and so forth in the step S211.

Meanwhile, the group work cooperation section 3 is implemented as a group work cooperation program which is executed in the terminals 1a to 1c used by the respective engineers for the purpose of managing the works conducted by the respective engineers in charge of developing a product and making it possible to share information about the progress of the schedule, to access working tools, and to provide a guide to the procedure and the work specifications of the respective work. More specifically speaking, the guide to the work specifications is provided by displaying the schedule of the development works of the respective produces and obtaining guide files and original form files on the basis of the schedule file and the work flow file as obtained from the product directories.

Also, the group work cooperation program serves to provide a guide to running the tools required for doing the respective works. For example, explained in the case of the environment of a semiconductor device, there are a number of semiconductor device development steps which include preparation of circuit designs for the semiconductor device, logic simulation, bonding check, preparation of layout designs, LOT of the designs, Assly request, preparation of masks, preparation of test programs, inventory confirmation, mark arrangement, transferring documents and so forth. The group work cooperation program can be used to access to a predetermined storage device for opening (executing) tools (application softwares) and data (files) required for the respective work steps.

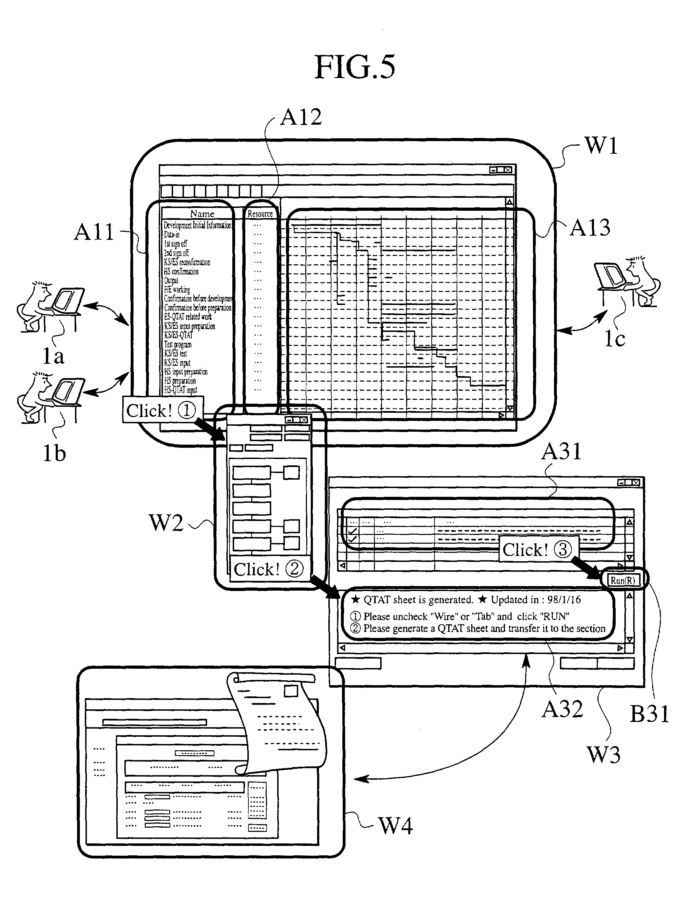

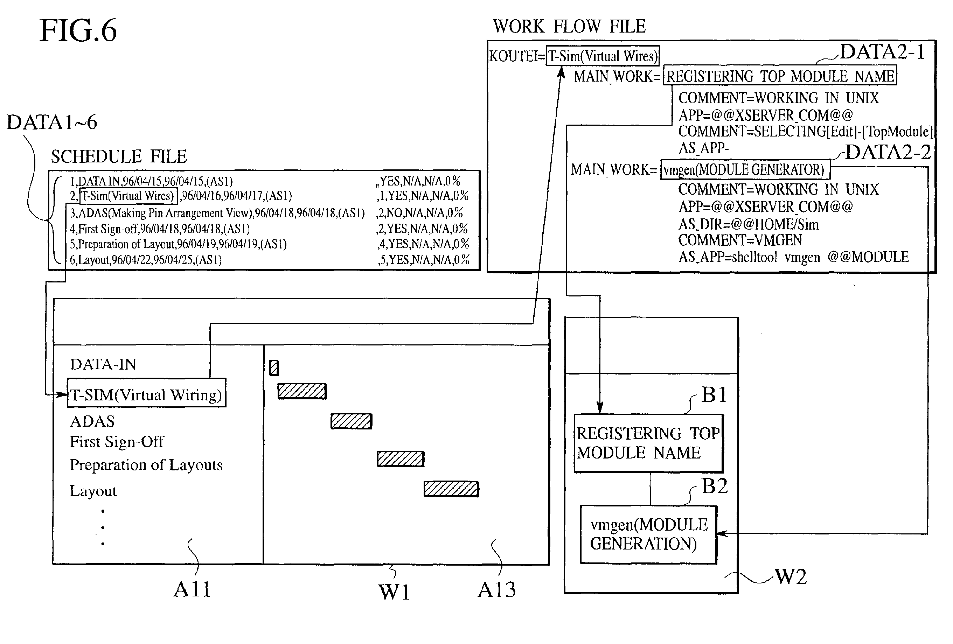

Next, the operation of the group work cooperation program as described above will be explained in details. Fig.5 is an explanatory view for showing the operation of the group work cooperation program as displayed in the screen of one of the terminals 1a to 1c. Fig.6 is a schematic representation for showing the relationship between the group work cooperation program and the schedule and work flow files.

As illustrated in Fig.5, the group work cooperation program serves to display a main window W1, a work flow window W2 and a work guide window W3. Meanwhile, the group work cooperation program is implemented with functions of executing other application programs and therefore also serves to display another application window W4.

The main window W1 is a window which is shared by all the engineers in charge and includes an area A11 for displaying the work steps, an area A12 for displaying the departments related to the development and the area A13 for displaying the schedule of the respective work steps.

The schedule file as generated by the server 2 is obtained in order to display, in the area A11, the specifications of the respective work steps written in the schedule file.

More specifically speaking, as illustrated in Fig.6, there are written in the schedule file, as the work steps, entries DATA 1 to 6 required for the development of the produce in question in the order of the time sequence of the work steps. The entries DATA 1 to 6 include the names of the work steps, the times of starting the work steps and the times of finishing the work steps.

The entries DATA 1 to 6 as written in the schedule file are referred to for displaying the names of the work steps the area A11 in the order of the time sequence of the work steps and correspondingly displaying the times of starting the work steps and the times of finishing the work steps in the area A13 as a time chart.

The work flow window W2 is used to display a flowchart showing the respective items to be conducted for one of the work steps as selected in the area A11. Namely, the name of any work step as displayed in the area A11 can be selected, e.g., by means of a cursor and the like, making it possible to display the work flow of the work step as selected by click operation of the cursor and the like (Click!①) in the work flow window W2.

In this regard, more specifically speaking, the work flow file contains the work items (e.g., DATA2-1, 2-2) of each of the respective work steps corresponding to the entries DATA 1 to 6 as written in the schedule file. When any one of the work steps is selectod from the area A11, the necessary data is read out from the work flow file corresponding to the work step as selected in order to display the names of the work items written therein as blocks B 1 and B2.

Also, the work items DATA2-1, 2-2 contain command strings for executing tools used the respective work items and the names of data, files, addresses and so forth to be referred to, and selectively displayed as the blocks B1 and B2 in the work guide window W3 corresponding to the block as selected by click operation of the cursor and the like (Click!②).

Tho work guide window W3 is used to display the block as selected in the work flow window W2, the guide to the related working, the execution procedures of the necessary tools and includes an area A31 provided for manipulating the execution commands of the necessary tools required in the respective steps and an area A32 for displaying the latest information about the change of tools in usage, version up news and so forth, help information about how to use the tools, and other necessary information.

Namely, in response to the input operation (Click!②) in the window W2, the execution commands of tools is displayed on the area A31, while necessary information are displayed on the area A31 by accessing the help file, on the basis of the work items DATA2-1, 2-2 in the work flow file.

Also, the work guide window W3 includes an execution button B31 which can be clicked (Click!③) or other equivalent input manipulation to execute any tool as described in the window W3.

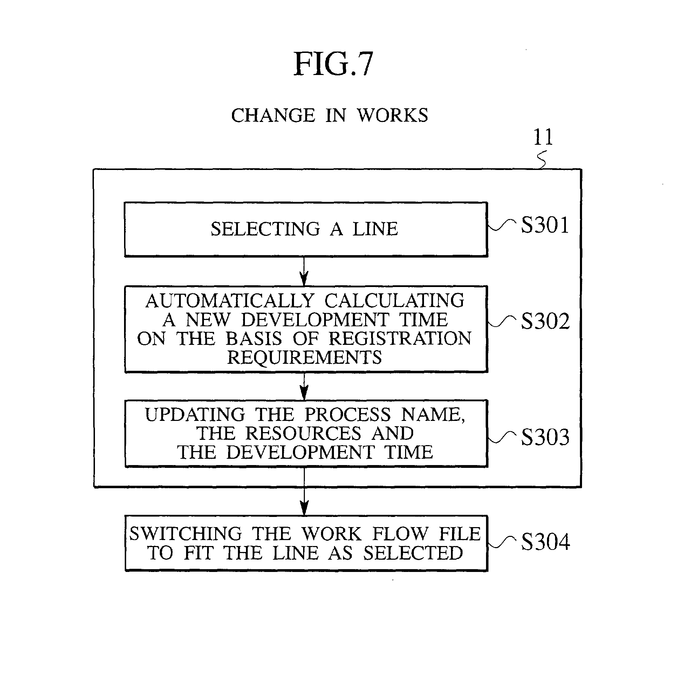

Next, an explanation will be made of the system in the case when the development project is amended to require change in the work specifications. As illustrated in Fig.7, at first, a production line is selected by the work specification changing section 11c in the step S301. At this time, the work specification changing section 11c serves to automatically calculate a new development time in the step S302 on the basis of registration requirements which are determined by the selection of the production line. The process name, the resources and the information about the development time are updated and registered to the server 2 in the step S303 on the basis of the development time as calculated. Furthermore, the work flow file is switched in the step S304 to fit the line as selected.

In accordance with the group work control system and the group work control method as described above, it is possible to execute the tools required for developing semiconductor products and related technologies because the guide information to a work item is displayed only clicking the work item as displayed in the window W2 which includes the button B31 which is clicked to execute the tools (application software and the like) required for the work item. Accordingly, even inexperienced engineers can quickly comprehend the tools required for each step of development.

Also, the information as displayed on the window W2 is displayed on the basis of the work flow file given from the server 2 while it is judged whether or not the work flow file is updated, when reading the work flow file, so that the latest information is displayed on the window W2. Accordingly, it is possible to perform the version control of tools and provide the text files and the latest versions of the programs required for developing semiconductor products and related technologies.

Also, in the case of the present embodiment, the schedule file and the work flow file are maintained in the server 2 and can be updated to the latest versions. Since the respective engineers in charge of the development can access to the server 2 through the terminals 1a to 1c and therefore share the current progress of the works, any change of the schedule and so forth with each other as well as the departments relating to the development while all the engineers in charge of the development can make use of any effective tools.

Furthermore, even when the schedule is changed, it is possible to conduct necessary arrangement among the respective work steps in an appropriate order only by updating the schedule file so that all the engineers are informed at the same time of the alteration of the schedule of proceeding the project and any change of the work steps.

Still further, it is possible to centralize the control of maintaining the manuals of the tools and version-up information as well as change of tools and the like and therefore to provide an optimum procedure as packaged for each of the respective development steps required for developing semiconductor products and related technologies.

As explained above, in accordance with the group work control system and the group work control method of the above embodiment of the present invention, it is possible to let the respective engineers know necessary information relating to the development without delay and share the information about the application software required for each step of development and information about the progress of the schedule to improve the efficiency of collaboration, in the case of the development conducted by a plurality of engineers in a plurality of development steps.

The foregoing description of the embodiments has been presented for purposes of illustration and description. It is not intended to be exhaustive or to limit the invention to the precise form described, and obviously many modifications and variations are possible in light of the above teaching. The embodiment was chosen in order to explain most clearly the principles of the invention and its practical application thereby to enable others in the art to utilize most effectively the invention in various embodiments and with various modifications as are suited to the particular use contemplated.

## Claims

1. A group work control system for controlling a work having a plurality of work steps through a network of terminals connected to each other by a communication line, said group work control system comprising:
a file generator which is connected to said network and configured to generate a schedule file in which the schedule of said work steps is written;
a database which is configured to store said schedule file in order that said schedule file is accessible through said network; and
an output device which is configured to provide work items to be conducted in the respective work steps on the basis of said schedule file as obtained.

2. The group work control system as claimed in claim 1 further comprising
a tool executing device which is configured to execute an application program for use in said respective work items on the basis of a tool executing file in which is written tool information necessary when said application program is used to conduct said respective work items.

3. The group work control system as claimed in claim 1 wherein
said output device is provided with a function of displaying guide information about working to be conducted by a user when conducting said respective work items corresponding to said work steps.

4. The group work control system as claimed in claim 1 wherein said file generator has a function of registering the works of a project and a function of altering a template file which is provided corresponding to said works of the project and in which is written a standard work time.

5. The group work control system as claimed in claim 1 further comprising:
a logic operation device which is configured to judge whether or not previous works have been finished in advance of said work items as provided; and
a setup device which is configured to prepare tools required for next work items when the previous works have been finished.

6. The group work control system as claimed in claim 1 further comprising:
a file updating device which is configured to update said schedule file when it is confirmed that a user has completed a work item.

7. A group work control method for controlling a work having a plurality of work steps through a network of terminals connected to each other by a communication line, said group work control method comprising:
generating a schedule file in which a schedule of said work steps is written;
storing said schedule file in a database accessible through said network; and
di splaying work items to be conducted in the respective work steps on the basis of said schedule file.

8. The group work control method as claimed in claim 7 further comprising:
storing a tool executing file in which is written tool information necessary when the application program is used to conduct said respective work items;
obtaining said tool executing file in response to selection by a user; and
executing said application program by said tool executing file.

9. The group work control method as claimed in claim 7 further comprising:
displaying guide information about working to be conducted by a user when conducting said respective work items corresponding to said work steps.

10. The group work control method as claimed in claim 7 further comprising, when said schedule file is generated,
registering a development project;
obtaining a template file which is provided corresponding to said project and in which is written a standard work time; and
altering said template file when required.

11. The group work control method as claimed in claim 7 further comprising:
judging whether or not previous works have been finished in advance of said work items as displayed; and
preparing execution of tools required for the next work items when the previous works have been finished.

12. The group work control method as claimed in claim 7 further comprising:
updating said schedule file when it is confirmed that a user has completed a work item.

13. A work control program product comprising a computer readable medium having computer program logic stored therein for controlling a work having a plurality of work steps through a network of terminals connected to each other by a communication line by the use of a template file in which is written a standard work time, wherein said computer program logic comprises:
a step of amending a template file by registering the start-up date of said work steps in a calendar file;
a step of generating a schedule file containing a day's program of said work steps on the basis of the template file as amended; and
a step of storing said schedule file in a database accessible through said network.

14. A work control program product comprising a computer readable medium having computer program logic stored therein for controlling a work having a plurality of work steps through a network of terminals connected to each other by a communication line, wherein said computer program logic comprises:
a step of obtaining a development project as registered in said network;
a step of determining whether or not a schedule file as prepared corresponding to said development project is updated;
a step of obtaining the latest schedule file as updated when said schedule file is updated; and
a stop of displaying the latest schedule file as obtained in the form of a flowchart.
